# EUROPÄISCHE PATENTSCHRIFT

(11) **EP 1 312 948 B1**
(45) Veröffentlichungstag und Bekanntmachung des Hinweises auf die Patenterteilung: **08.11.2006**
(21) Anmeldenummer: 03004048.9
(22) Anmeldetag: 13.10.1998
(51) Int. Cl.: G02B 6/138, G02B 6/122, G02B 6/43

(54) **Anordnung von Wellenleiterstrukturen mit optischen Komponenten**
Arrangement of waveguide structures with optical components
Arrangement de structures à guide d'onde avec composants optiques

(30) Priorität: 22.10.1997 DE 19746508
(43) Veröffentlichungstag der Anmeldung: 21.05.2003
(62) Teilanmeldung aus: 98119276.8
(73) Patentinhaber: ERNI Management AG, 6052 Hergiswil (CH)
(72) Erfinder: Moisel, Jörg, 89231 Neu-Ulm (DE)
(74) Vertreter: Jakelski, Joachim

(56) Entgegenhaltungen:
- WO-A-96/07117
- DE-A- 19 618 149
- US-A- 5 473 721
- L.BALLIET ET AL.: "Module-to-module communication via fiber-optic piping" IBM TECHNICAL DISCLOSURE BULLETIN., Bd. 22, Nr. 8b, Januar 1980 (1980-01), Seiten 3519-3520, XP002092656 NEW YORK US
- R.WIESMANN ET AL.: "Monomode polymer waveguides with integrated mirrors" 22ND EROPEAN CONFERENCE ON OPTICAL COMMUNICATION, Bd. 2, 15. September 1996 (1996-09-15), - 19. September 1996 (1996-09-19) Seiten 265-268, XP002092657 oslo,norway

## Beschreibung

Die Erfindung betrifft eine Anordnung von Wellenleiterstrukturen nach dem Oberbegriff des Patentanspruches 1.

Die Erfindung findet u.a. Verwendung in der optischen Datenverarbeitung, insbesondere in der optischen Nachrichtenübertragung, da für diesen Bereich Wellenleiter benötigt werden, bei denen die Wellen möglichst verlustarm ein- und ausgekoppelt werden.

Es ist für Monomode-Wellenleiter bekannt, für die Umlenkung von Wellen aus der Wellenleiterebene Spiegelflächen einzusetzen, die durch anisotropes Ätzen in Silizium und anschließendes Verspiegeln der Flächen hergestellt werden . Dazu werden z.B. an den Endflächen der Wellenleiter V-Nuten (J.Moisel et al. Appl.Optics 1997, Vol.36 No.20) oder entsprechende Silizium-Vorformen (R.Wiesmann et al., Proc.Europ.Conf. on Optical Communication, 1996, S. 2265 bis 2268)hergestellt, die verspiegelt werden. Dies hat jedoch den Nachteil, daß die Umlenkrichtung durch die Kristallebenen des Silizium bestimmt werden und deshalb lediglich Umlenkungen von ca. 70° oder weniger möglich sind. Weiterhin ist nachteilig, daß die Verluste bei der Ein- und Auskopplung relativ hoch sind, da die Wellen an der Oberkante der Spiegel vorbeilaufen.
In der US 5 473 721 ist eine optische Leiterplatte beschrieben, die durch strukturiertes Fräsen eines Trägerkörpers mit anschließender Nachbehandlung der Fräskanale und Einbringen des Wellenleitermaterials mit nachfolgender Aushärtung durch UV-Belichtung hergestellt wird. Nachteilig bei dieser Lösung ist der erhebliche apparative Aufwand sowie die mangelnde Flexibilität bei der Einbringung optischer Komponenten in die Struktur.
Aus der GB-A-2 155 194 ist bekannt unter Verwendung von festem homogenen photochromen Material durch Bestrahlung mittels UV-Laser Wellenleiterstrukturen zur schaffen. Durch die Bestrahlung des photochromen Materials wird die Farbe bzw. der Brechungsindex des Materials verändert, wodurch die Wellenleiterstruktur abschließend geschaffen wird. Diese Wellenleiterstrukturen zeigen keine Möglichkeit einer differenzierten Auskopplung der Lichtsignale.
Aus der internationalen Patentanmeldung WO 96/07117 A ist eine Anordnung von Wellenleiterstrukturen gemäß dem Oberbegriff des Anspruchs 1 bekannt.
Der Erfindung liegt deshalb die Aufgabe zugrunde, eine Anordnung von Wellenleiterstukturen mit optischen Komponenten für die Ein- und Auskopplung von Wellen anzugeben, wodurch die Wellen verlustarm ein- und ausgekoppelt werden und beliebige Kopplungen möglich sind.

Die Erfindung ist im Patentanspruch 1 beschrieben. Vorteilhafte Ausgestaltungen und/oder Weiterbildungen sind in den Unteransprüchen enthalten.

Bei der erfindungsgemäßen Anordnung von Wellenleiterstrukturen sind vor der Herstellung der Wellenleiter die optischen Komponenten, z.B. Umlenkspiegel auf einem Träger aufgebracht und nachfolgend wird die Wellenleiterstruktur mittels Direktschreiben mit einer inkohärenten Lichtquelle auf dem Träger hergestellt. Dazu wird entweder eine flüssige, lichtempfindlichen Schicht aus z.B. einem Polymer auf dem Träger aufgebracht und anschließend werden die optischen Komponenten in die flüssige Schicht eingebracht oder die optischen Komponenten werden an vorgegebenen Auskoppelstellen direkt auf dem Träger aufgebracht.

Die Erfindung hat den Vorteil, daß Multimode-Wellenleiter herstellbar sind, die eine verlustarme Ankopplung von Prozessorboards an optische Backplane-Leisten gewährleisten.
Ein weiterer Vorteil besteht darin, daß die optischen Komponenten in herkömmlicher Schleif- und Poliertechnik hergestellt werden können und sich damit beliebige Umlenkwinkel realisieren lassen.
Durch die Einbettung der optischen Komponenten in die Wellenleiterstruktur werden vorteilhafterweise zusätzliche Grenzflächen vermieden, an denen Verluste durch Reflexionen auftreten können. Durch die Einbettung der optischen Komponenten in den Wellenleiter erreicht man weiterhin einen Schutz der optischen Komponenten vor Umwelteinflüssen.

Die Erfindung wird im folgenden anhand von Ausführungsbeispielen beschrieben unter Bezugnahme auf schematische Zeichnungen.

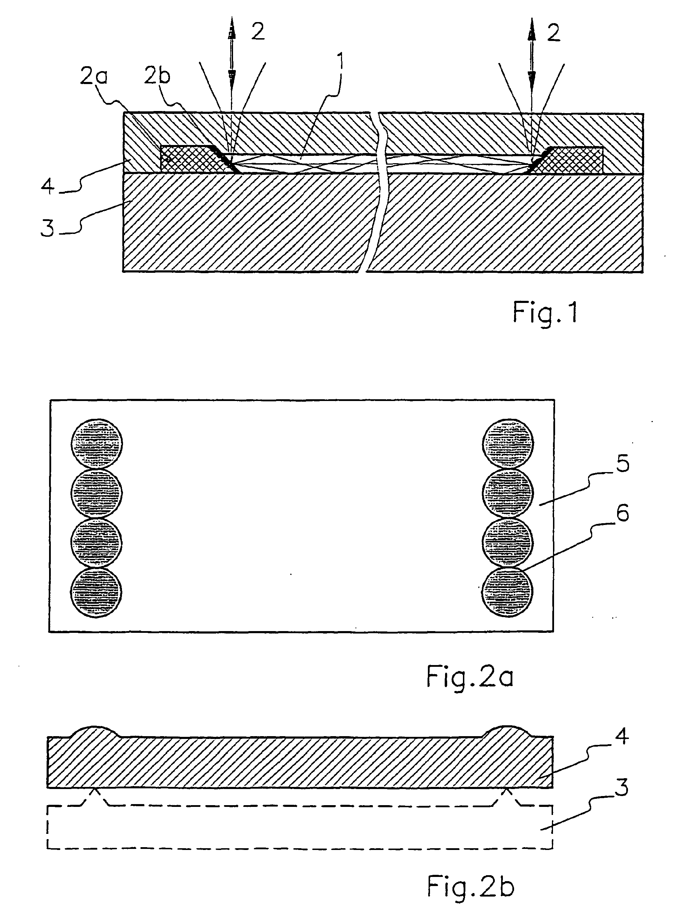

In Fig. 1 ist in einem ersten Ausführungsbeispiel ein Wellenleiter 1 mit integrierten Auskoppelspiegeln 2 als optischen Komponenten dargestellt. Auf einem Träger 3 werden die Auskoppelspiegel 2, die z.B. aus einem Spiegelträger 2a und einer Spiegelschicht 2b bestehen, auf vorgegebenen Auskoppelstellen aufgebracht. Anschließend wird zwischen den Spiegeln eine flüssige, lichtempfindliche Schicht, z.B. eine Polymerschicht mit einem Brechungsindex n1 abgeschieden und die optischen Komponenten werden in die Schicht eingebettet. Der Träger 3 besitzt einen Brechungsindex n3, der kleiner ist als der Brechungsindex n1. Es wird anschließend die Wellenleiterstruktur mittels Direktschreiben hergestellt. Dazu wird eine inkohärente Lichtquelle verwendet, deren Bild in dem lichtempfindlichen, flüssigen Material abgebildet wird. Dabei werden Träger und das Bild der Lichtquelle relativ zueinander bewegt, derart, daß die Spur des Bildes in dem beschichteten Trägermaterial den Wellenleiter ergibt. Das Material der lichtempfindlichen Schicht wird durch die Belichtung ausgehärtet. Nach erfolgter Belichtung wird das nicht ausgehärtete Material entfernt. Auf den derart strukturierten Träger wird anschließend eine Deckschicht 4 abgeschieden, die z.B. aus einem Polymer besteht, das einen Brechnungsindex n2 besitzt. Dabei muß der Brechungsindex n2 der Deckschicht kleiner sein als der Brechungsindex n1 der lichtempfindlichen Schicht, um die Wellen zwischen den Spiegeln zu führen.
Die zur Kollimation benötigten Linsen sind außerhalb des strukturierten Trägers zwischen strukturiertem Träger und Teilnehmerboard angeordnet.

In einem weiteren Ausführungsbeispiel wird auf dem Träger 3 zuerst eine flüssige, lichtempfindliche Schicht aus einem Polymer mit einem Brechungsindex n1 aufgebracht. Die optischen Komponenten werden in die flüssige, lichtempfindliche Schicht an vorgegebenen Auskoppelstellen eingelassen. Dazu werden die optischen Komponenten beispielsweise mittels einer Vorrichtung angesaugt und dann in die flüssige Schicht eingedrückt. Es erfolgt die Herstellung der Wellenleiterstruktur in der flüssigen, lichtempfindlichen Schicht mittels Direktschreiben. Das nicht ausgehärtete Material der Polymerschicht wird anschließend entfernt und auf den strukturierten Träger wird eine Deckschicht aufgebracht.

Dadurch daß die Oberflächen der optischen Komponenten in die Wellenleiter eingebettet sind, werden sie vor Umwelteinflüssen geschützt und es werden keine weiteren Grenzflächen gebildet, an denen Verluste durch Reflexionen auftreten.

Aus der bereits erwähnten Veröffentlichung von R. Wiesmann et al., Proc.Europ.Conf. On Optical Communication, 1996, Bd. 2, S. 265-268 ist es bekannt, dass es bei einer Vielzahl von Wellenleitern, z. B. für die Herstellung eines Datenbusses, vorteilhaft ist, den Wellenleiterträger aus einem Spritzgussteil herzustellen, das eine Spiegel- und Wellenleiterstruktur enthält.

Anstelle der Deckschicht wird dann eine Deckplatte 4 auf den mit optischen Komponenten und Wellenleiter strukturierten Träger 3 aufgebracht (Fig. 2a). Die Deckplatte 4 besteht z.B. aus einem Spritzgußteil 5, das die zur Kollimation benötigten Linsen 6 enthält (Fig. 2b).

Da die Umlenkspiegel unabhängig vom Herstellungsprozeß der Wellenleiter auf dem Trägermaterial angeordnet werden, sind beliebige Umlenkwinkel erreichbar. In Fig. 1 sind die Spiegel beispielsweise mit einer Spiegelneigung von 45° angeordnet und dadurch wird eine Umlenkung der Wellen von 90° erzielt.

Durch die Einbettung der optischen Komponenten in die Wellenleiterstruktur ist keine nachträgliche Endflächenpräparation der Wellenleiter und keine zusätzliche Justage der optischen Komponenten notwendig.

Die Erfindung ist nicht auf die beschriebenen Ausführungsbeispiele beschränkt, sondern es sind verschiedene Ausgestaltungen von Träger und Deckschicht bzw. Deckplatte denkbar. Insbesondere erlaubt das Verfahren des Direktschreibens von Wellenleiterstrukturen, Wellenleiter auf beliebigen Flächen herzustellen, wobei nach Aufbringen der Deckschicht oder Deckplatte wiederum eine ebene Fläche erzielt wird, auf die weitere Wellenleiterstrukturen oder Träger mit integrierten optischen Komponenten aufgebracht werden können. Auf diese Weise lassen sich kompakte dreidimensionale Wellenleiterstrukturen herstellen.

## Patentansprüche

1. Anordnung bestehend aus Wellenleiterstrukturen (1) und optischen Komponenten (2) auf einem Träger (3) mit vorgegebenen Auskoppelstellen,
wobei Wellenleiter (1) und optische Komponten (2) mit einer Deckschicht (4) bedeckt sind,
wobei ein Wellenleiter (1) zwischen optischen Komponenten (2) derart angeordnet ist, daß die optischen Komponenten (2) in die mit der Deckschicht (4) bedeckten Wellenleiter (1) eingebettet (1) eingebettet sind, wobei eine optische Komponente einen Auskoppelspiegel darstellt und der Auskoppelspiegel (2) aus einer auf einen Spiegelträger (2a) aufgebrachten Spiegelschicht (2b) besteht,
wobei der Träger (3) und der Auskoppelspiegel (2) separat ausgebildet sind,
und wobei der Wellenleiter (1) auf dem gemeinsamen Träger (3) angeordnet ist,
**dadurch gekennzeichnet,**
**dass** eine Fläche des Spiegelträgers (2a) einen vom Wellenleiter (1) unbedeckten Bereich der Oberseite des gemeinsamen Trägers (3) flächig kontaktiert.

2. Anordnung nach Anspruch 1, **dadurch gekennzeichnet, daß** optische Komponenten (2) direkt auf dem Träger (3) befestigt sind.

3. Anordnung nach Anspruch 1, **dadurch gekennzeichnet, daß** optische Komponenten (2) auf einem beschichteten Träger (3) angeordnet sind.

4. Anordnung nach Anspruch 1, **dadurch gekennzeichnet, daß** auf einem Kunststoffträger (3) eine Vielzahl von Wellenleitern (1) und optische Komponenten (2) integriert sind.

5. Anordnung nach Anspruch 1, **dadurch gekennzeichnet, daß** die Wellenleiterstruktur (1) und die optischen Komponenten (2) mit einer Deckplatte (4) aus Kunststoff mit integrierten Linsen (6) abgedeckt sind.

## Claims

1. Arrangement comprising waveguide structures (1) and optical components (2) on a carrier (3) with predetermined decoupling points,
wherein waveguides (1) and optical components (2) are covered by a cover layer (4),
wherein a waveguide (1) is arranged between optical components (2) so that the optical components (2) are embedded in the waveguides (1) that are covered by the cover layer (4), with one optical component constituting a decoupling mirror and the decoupling mirror (2) consisting of a mirror layer (2b) applied on a mirror carrier (2a),
wherein the carrier (3) and the decoupling mirror (2) are separate structures,
and wherein the waveguide (1) is arranged on the common carrier (3),
**characterized in that**
a surface of the mirror carrier (2a) is in surface contact with an area of the upper surface of the common carrier (3) that is not covered by the waveguide (1).

2. The arrangement as defined in Claim 1, **characterized in that** optical components (2) are fixed directly on the carrier (3).

3. The arrangement as defined in Claim 1, **characterized in that** optical components (2) are arranged on a coated carrier (3).

4. The arrangement as defined in Claim 1, **characterized in that** a plurality of waveguides (1) and of optical components (2) are integrated on a plastic carrier (3).

5. The arrangement as defined in Claim 1, **characterized in that** the waveguide structure (1) and the optical components (2) are covered by a cover plate (4) made from a plastic material with integrated lenses (6).

## Revendications

1. Dispositif constitué de structures de guides d'ondes (1) et de composants optiques (2) sur un support (3) comportant des positions de découplage prédéfinies, dans lequel
- les guides d'ondes (1) et les composants optiques (2) sont recouverts d'une couche de recouvrement (4),
- un guide d'ondes (1) est disposé entre des composants optiques (2) pour encastrer les composants optiques dans les guides d'ondes (1) couverts de la couche de recouvrement (4), un composant optique représentant un miroir de découplage (2) constitué d'une couche formant miroir (2b) appliquée sur un support de miroir (2a),
- le support (3) et le miroir de découplage (2) sont formés de manière séparée, et
- le guide d'ondes (1) est disposé sur le support commun (3),
**caractérisé en ce qu'**
une surface du support de miroir (2a) est en contact superficiel avec une zone, non recouverte par le guide d'ondes (1), du côté supérieur du support commun (3).

2. Dispositif selon la revendication 1,
**caractérisé en ce que**
les composants optiques (2) sont fixés directement sur le support (3).

3. Dispositif selon la revendication 1,
**caractérisé en ce que**
les composants optiques (2) sont disposés sur un support revêtu (3).

4. Dispositif selon la revendication 1,
**caractérisé en ce que**
sur un support (3) en matière plastique, est intégré un grand nombre de guides d'ondes (1) et de composants optiques (2).

5. Dispositif selon la revendication 1,
**caractérisé en ce que**
la structure de guide d'ondes (1) et les composants optiques (2) sont recouverts d'une plaque de recouvrement (4) en matière plastique comportant des lentilles intégrées (6).
